# EUROPÄISCHE PATENTSCHRIFT

(11) **EP 1 389 562 B1**
(45) Veröffentlichungstag und Bekanntmachung des Hinweises auf die Patenterteilung: **06.10.2004**
(21) Anmeldenummer: 03000124.2
(22) Anmeldetag: 03.01.2003
(51) Int. Cl.: B60P 7/15, B60P 7/08

(54) **Vorrichtung zum Sichern von Ladegut auf der Ladefläche eines Fahrzeuges**
Load securing device on a loading platform of a vehicle
Dispositif pour la fixation de la charge sur une plate-forme d' un véhicule

(30) Priorität: 15.08.2002 DE 20212820 U; 10.10.2002 DE 20215612 U
(43) Veröffentlichungstag der Anmeldung: 18.02.2004
(73) Patentinhaber: ANCRA Jungfalk GmbH & Co. KG, 78234 Engen (DE)
(72) Erfinder: Fugel, Thomas, Dipl.-Ing., 78234 Engen (DE)
(74) Vertreter: Hiebsch, Gerhard F., Dipl.-Ing.

(56) Entgegenhaltungen:
- DE-A- 10 145 416
- DE-U- 9 006 685
- DE-U- 20 016 200
- DE-U- 20 101 838

## Beschreibung

Die Erfindung betrifft eine Vorrichtung zum Sichern von Ladegut auf der Ladefläche eines Fahrzeuges od.dgl. Einrichtung in Form eines balkenartigen Profils mit wenigstens einem an diesem einends gelagerten Einsatzprofil, an dem ein Schwenkkopf rinnenartigen Querschnitts und einem relativ zu ihm bewegbar gelagerten Klinkenbolzen als Anschlussorgan für Gegenorgane an der Ladefläche -- bzw. an einem dieser zugeordneten Kastenaufbau -- mittels eines Achsbolzens angelenkt ist.

Eine solche gattungsgemäße Vorrichtung offenbart die Schrift zu DE 201 01 838 U1 der Anmelderin. Der Schwenkkörper dieser Vorrichtung ist mit einem relativ zu ihm bewegbaren Einsatzelement für eine Rastausnehmung als Gegenorgan versehen, welches als Klinkenkörper ausgebildet und mittels eines eigenen Querbolzens am Schwenkkörper festgelegt ist. Ein freies Ende des Klinkenkörpers ist mittels eines dieses durchsetzenden Stiftes mit einem Zurrgurt verbunden.

Die DE 44 12 067 C der Anmelderin beschreibt ein an den Fahrzeugseitenwänden in Abstand zur Ladefläche etwa horizontal vorgesehenes Paar von Führungsschienen, an die endwärtige Verbindungsorgane eines zwischen ihnen in Betriebsstellung verlaufenden Tragprofiles angeschlossen werden; dieses Tragprofil ist in Abstand zu einem Profilende mit einem strangartigen Lenker durch ein Gelenk verbunden und der Lenker andernends mittels eines weiteren Gelenkes ortsfest gelagert. Dieses Tragprofil kann um sein Gelenk und der Lenker um das weitere Gelenk aus einer Betriebsstellung in eine Ruhelage geklappt sowie mittels des endwärtigen Gelenkes an die eine Führungsschiene angefügt werden.

Bekannt ist zudem ein -- infolge einschiebbarer Zwischenrohre -- teleskopartig verlängerbar ausgebildetes Hohlprofil mit beidends vorgesehenen Haken als sog. Zwischenwandverschluss, zwischen dessen einen Hakenschenkel und die dazu etwa parallel benachbarte Profilstirnkante eine zu dem hierbei entstehenden Spalt quer verlaufende Führungsschiene oder ein Wandelement eines Lastwagenaufbaus eingeschoben werden kann. Zum Erzeugen einer Klemmkraft kann jener -- an einem am Stabprofil vernieteten Zughebel angelenkte -- Haken abstandsveränderlich zu der mit dem Klemmschenkel ein Klemmmaul bildenden Profilstirnkante bewegt werden.

In Kenntnis dieses Standes der Technik hat sich der Erfinder das Ziel gesetzt, sowohl die Anpassung der eingangs beschriebenen Vorrichtung an die Gegebenheiten des Einsatzortes als auch ihre Handhabung weitergehend zu verbessern.

Zur Lösung dieser Aufgabe führt die Lehre des unabhängigen Anspruches; die Unteransprüche erfassen günstige Weiterbildungen.

Erfindungsgemäß ragt der Klinkenbolzen außerhalb des rinnenartigen Querschnitts des Schwenkkopfes von einem Klinkenkörper zur Firstplatte des Schwenkkopfes hin auf und der Klinkenkörper - dem ein Kraftspeicher zugeordnet ist -- wird vom Achsbolzen des Schwenkkörpers durchsetzt. Zudem soll dieser Klinkenkörper nahe dem Klinkenbolzen mit einer Öse versehen sein als Kupplungselement für einen erfindungsgemäßen Betätigungs- oder Zugstab, der bevorzugt ein zu seiner Stabachse etwa radial gebogenes Kupplungsende als Steckorgan für die Öse des Klinkenkörpers aufweist; dieses Kupplungsende lagert in der Öse drehbar. Der Betätigungsstab ermöglicht eine besonders exakte Führung des Schwenkkopfes.

Nach einem weiteren Merkmal der Erfindung fluchtet die Stabachse mit der Mittelachse des Schwenkkopfes, d.h. jenes Kupplungsende wird durch die Stabachse in zwei gleich große Abschnitte geteilt, und die Öse lagert in der Mitte des Kupplungsendes.

Der besseren Handhabung wegen soll der Zugstab einends zumindest einen Handgriff anbieten.

Es liegt im Rahmen der Erfindung, dass der Klinkenkörper andernends einen Heckabschnitt mit Aufnahmenut für den in dieser gehaltenen -- als Blatt- oder Stabfeder ausgebildeten -- Kraftspeicher aufweist; diese Blatt- oder Stabfeder ist bevorzugt zwischen dem Heckabschnitt des Klinkenkörpers und der benachbarten Firstplatte des Schwenkkopfes U-förmig gekrümmt und trachtet diese beiden Teile auseinander zu führen; dadurch wird das Ösenende des Klinkenkörpers gegen die Innenfläche der Firstplatte des Schwenkkopfes gedrückt.

Nach einem weiteren Merkmal der Erfindung lagert der Achsbolzen in einem Paar von parallelen Flankenstegen, die an Flankenwände des Einsatzprofils anschließen und mit diesem einstückig sein sollen. Diese Flankenwände sind innenseitig mit jeweils einer parallel zur Profilachse gerichteten Längsnut versehen, die bevorzugt jeweils von einem Paar von Innenrippen der Flankenwand begrenzt sind. Auch soll zumindest eine der Flankenwände mit einem achsparallelen Wandungsschlitz versehen sein.

Schließlich wird unter Schutz gestellt, dass an die Firstplatten des Schwenkkopfes außenseitig ein querschnittlich T-förmiges Kammprofil angeformt ist, dessen Kopfleiste in Ruhelage des Klinkenbolzens mit dessen Firstfläche etwa fluchtet; dieses Kammprofil verläuft querschnittlich in der Längsachse des Einsatzprofils.

Bei einer erfindungsgemäßen Ausgestaltung des Schwenkkopfes ragt das Kammprofil von einer ebenen -- die Längsachse des Einsatzprofils querenden -- Oberfläche der Firstplatte des Schwenkkopfes auf; die Breite der ebenen Oberfläche entspricht vorteilhafterweise etwa der Breite der Kopfleiste. Diese obere Oberfläche soll in Abstand zum Kammprofil querschnittlich beidseits in eine von ihr stufenartig aufragende Leistenanformung übergehen, deren Oberfläche wiederum in axialem Abstand etwa parallel zur Oberfläche der Firstplatte verläuft. Als günstig hat es sich erwiesen, dass die Leistenanformung seitlich die Außenfläche der benachbarten Schenkelwand des Schwenkkopfes überragt.

Bei einer anderen Formgebung des Kammprofils verläuft dieses zwischen zwei querschnittlich aufwärts gekrümmten Oberflächen der Firstplatte des Schwenkkopfes; diese Oberfläche ist von einer querschnittlich teilkreisförmigen Kontur an der Firstplatte bestimmt. Diese gekrümmte Oberfläche bildet beidseits der Längsachse des Einsatzprofils mit den beiden Außenflächen der Schenkelwände des Schwenkkopfes jeweils einen aufragenden Längsgrat; der Querschnitt bzw. die Kontur der Oberfläche wird von einer Kreiskontur bestimmt, deren Radius etwa der Breite des Schwenkkopfes entspricht bzw. etwa der doppelten Breite der Kopfleiste jenes Kammprofils.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

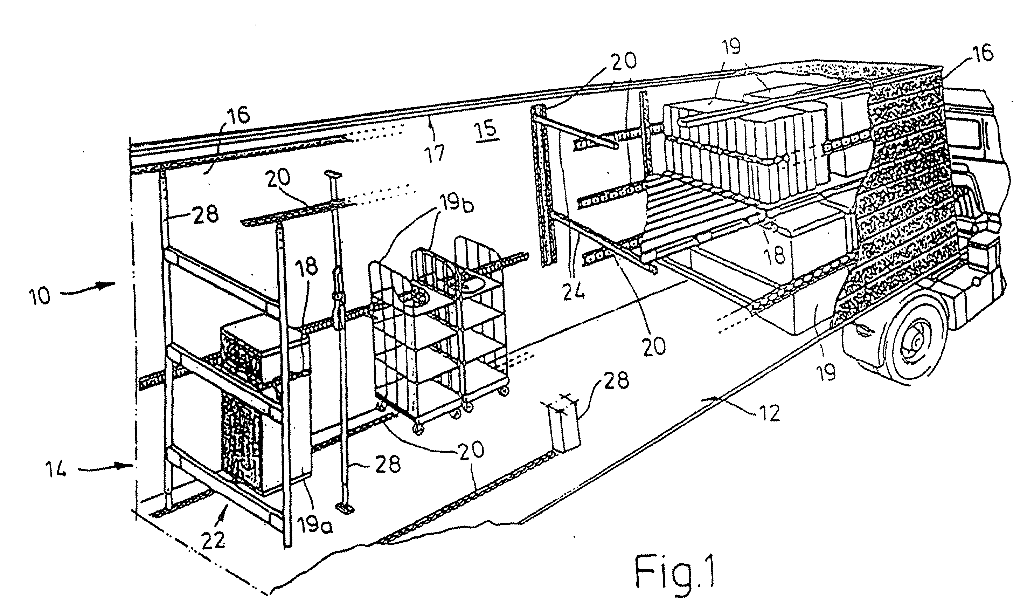

- Fig. 1:: eine Schrägsicht auf einen Teil einer Ladefläche eines Fahrzeuges mit Kastenaufbau sowie darin Schienen eines Ladungssicherungssystems zugeordneten Teilen;
- Fig. 2,3:: eine Seiten- und Frontansicht von Teilen eines vertikal einzubauenden Spannbalkens mit in Ruhelage befindlichem Schwenkkopf;
- Fig. 4:: eine andere Ausgestaltung des Spannbalkens der Fig. 3;
- Fig. 5:: die Draufsicht zu Fig. 2, 3;
- Fig. 6:: einen vergrößerten und teilweise geschnittenen Ausschnitt aus Fig. 2;
- Fig. 7:: eine den Fig. 3, 4 etwa entsprechende -- teilweise geschnittene -- Sicht auf eine weitere Ausgestaltung des Spannbalkens;
- Fig. 8:: die teilweise geschnittene Seitenansicht zu Fig. 7;
- Fig.9,10:: Schrägsichten auf den Schwenkkopf des Spannbalkens der Fig. 7, 8;
- Fig.11,16:: die Draufsicht auf ein teilweise wiedergegebenes Doppelstockprofil;
- Fig. 12:: den Querschnitt durch Fig. 11 nach deren Linie XII-XII;
- Fig. 13, 14:: vergrößerte Ausschnitte aus Fig. 11 gemäß deren Feldern XIII bzw. XIV;
- Fig. 15:: einen vergrößerten Teil der Fig. 12;
- Fig. 17, 18:: das Doppelstockprofil der Fig. 16 mit unterschiedlichen Lagen eines eingelegten Entriegelungsstabes.

Hinter dem Fahrerhaus eines nur teilweise dargestellten Fahrzeuges 10 ist eine Ladefläche 12 mit Kastenaufbau 14 vorgesehen. Auf der Ladefläche 12 und den Innenflächen 15 der Seitenwände 16 -- gegebenenfalls auch auf der Dachinnenfläche 17 -- des Kastenaufbaus 14 sind horizontal bzw. vertikal Schienenprofile als Zurrschienen 20 zum Festlegen von Ladegütern angebracht, beispielsweise von -- mit Zurrgurten 18 gehaltenen -- Kisten 19, Schränken 19ₐ oder Rollwagen 19_{b}. Zur Ladesicherung können auch leiterartige Gerüste 22 querschnittlich polygone oder runde Vertikalprofile 28 mit den Zurrschienen 20 verbunden werden. Bei 24 sind horizontale Spannbalken dargestellt, die beidends an vertikale Schienenprofile 20 angeschlossen sind.

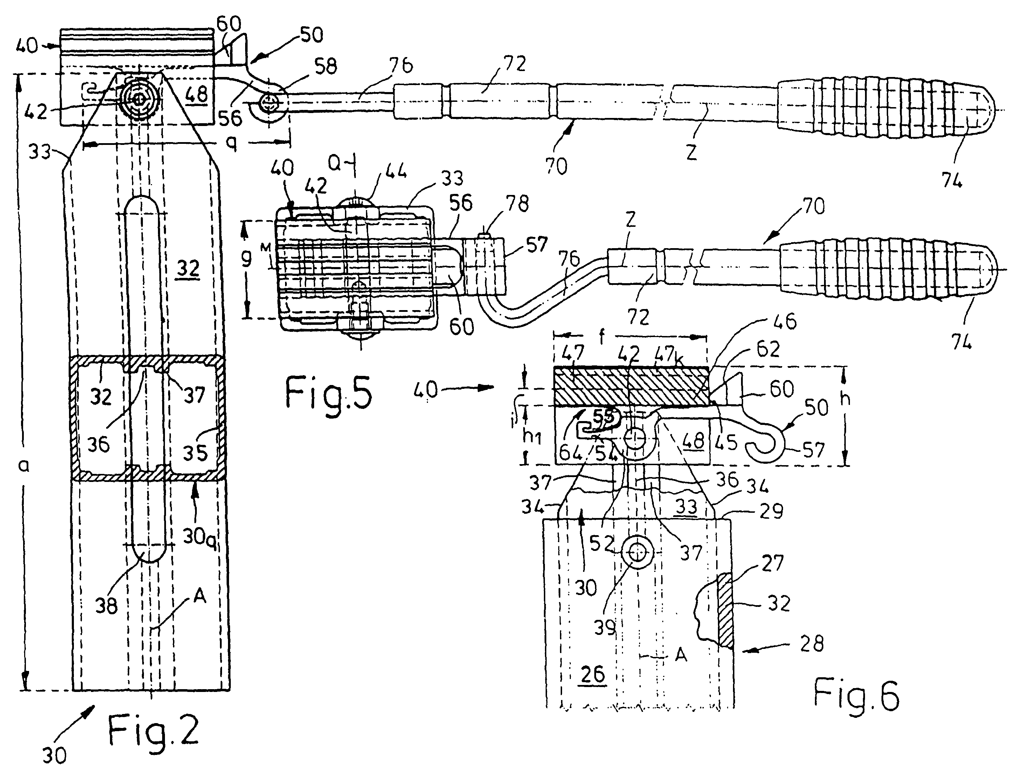

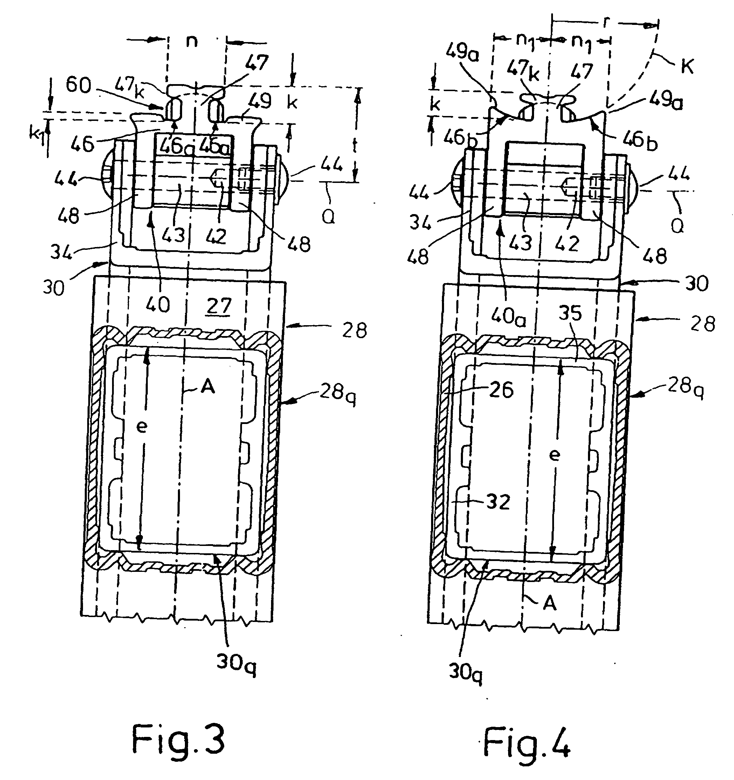

Das in Fig. 3, 4, 6 gezeigte Vertikalprofil 28, dessen rechteckiger Querschnitt in Fig. 3, 4 bei 28_{q} angedeutet ist, wird beispielsweise als Sperrbalken zur Bildung einer Stützwand für in einem Kastenaufbau 14 zu transportierende Kisten eingesetzt. In seine-- von zwei Flankenwänden 26 sowie zwei Stirnwänden 37 begrenzten -- Stirnöffnung 29 ist ein Einsatzprofil 30 der Länge a von hier 280 mm rechteckigen Querschnitts aus zwei Flankenwänden 32 der Querschnittslänge e von 75 mm und diese verbindenden Stirnwänden 35 eingeschoben; dessen Querschnitt zeigt Fig. 2 bei 30_{q}. Den Flankenwänden 32 sind innenseitig zwei -- eine Längsnut 36 begrenzende -- Innenrippen 37 angeformt. Zudem verläuft parallel zur Profillängsachse A ein Wandungsschlitz 38. Dieser endet nach oben hin etwa am Übergang der Flankenwand 32 zu einem zwickelförmigen Flankensteg 33, dessen Seitenkante der besseren Übersicht halber mit 34 bezeichnet ist.

Zwischen den beiden parallelen Flankenstegen 33 ist ein Schwenkkopf 40 durch eine -- ihn und die Flankenstege 33 durchsetzende -- Einheit aus einem Achsbolzen 42 und einer ihn aufnehmenden koaxialen Schraubhülse 43 mit zwei endwärtigen Bolzen- oder Tellerköpfen 44 drehbar gelagert. Dieser Schwenkkopf 40 einer Länge f von 73 mm, einer Breite g von 39 mm und einer Höhe h von 34 mm ist mit zwei von einer Firstplatte 46 ausgehenden Schenkelwänden 48 der lichten Höhe h₁ von 27 mm rinnenartig ausgebildet. An die Firstplatte 46 der Dicke i von hier 6,7 mm ist in der Längsachse A ein querschnittlich T-förmiges Kammprofil 47 der Kopfbreite n von 19,5 mm seiner -- jene Längsachse A querenden -- Kopfleiste 47ₖ angeformt, wie vor allem in Fig. 3, 4 zu erkennen. Der Abstand t zwischen der Firstfläche der Kopfleiste 47ₖ und der Längsachse Q des Achsbolzens 42 misst 32,2 mm.

Beim Ausführungsbeispiel der Fig. 3 ist das T-förmige Kammprofil 47 der Höhe k von 12,5 mm aus der beidseits an dieses als -- quer zur Längsachse A verlaufende -- ebene Fläche anschließenden Oberfläche 46ₐ der Firstplatte 46 herausgeformt. Die Breite dieser Oberfläche 46ₐ entspricht etwa der erwähnten Kopfbreite n der Kopfleiste 47ₖ; denn sie geht beidseits in von ihr aufragende Leistenanformungen 49 geringer Höhe k₁ über. Jeder der eine ebene Oberfläche anbietende Leistenanformungen 49 überragt seitlich die Außenfläche der ihr zugeordneten Schenkelwand 48 unter Bildung eines seitlichen Grates.

Beim Schwenkkopf 40ₐ der Fig. 4 ist ein Kammprofil 47 -- im Vergleich mit Fig. 3 -- geringerer Höhe k zu erkennen. Vom Fuße dieses Kammprofils 47 gehen beidseits querschnittlich teilkreisförmig aufwärts gebogene Oberflächen 46_{b} der Firstplatte 46 aus. Jede dieser Oberflächen 46_{b} erzeugt mit der Außenfläche der ihr zugeordneten Schenkelwand 48 in seitlichem Abstand n₁ von der Längsachse A einen aufwärts weisenden Längsgrat 49ₐ. Jene Oberflächen 46_{b} bestimmen eine Kreiskontur K, deren Radius r ihren doppelten Abstand n₁ etwa entspricht.

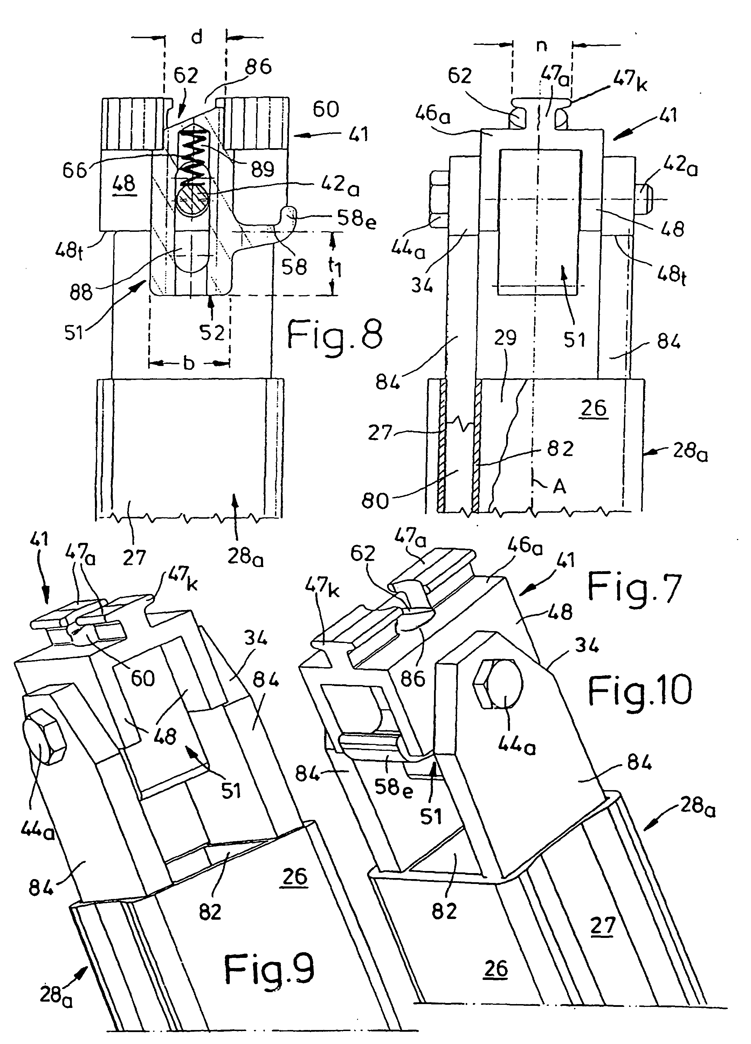

Zwischen den Schenkelwänden 48 ist -- an jenem Achsbolzen 42 -- ein Klinkenkörper 50 der Länge q von 97 mm schwenkbar gelagert; von einem -- vom Achsbolzen 42 durchsetzten -- rohrartigen Lagerabschnitt 52 ragt zum einen -- innerhalb des Schwenkkopfes 40 -- ein längsschnittlich rinnenartiger Heckabschnitt 54 mit einer etwa parallel zur Firstplatte 46 verlaufenden Aufnahmenut 55 zur Aufnahme des Endes einer bei 64 angedeuteten Stabfeder 64 ab sowie anderseits ein Frontarm 56, der außerhalb des Schwenkkopfes 40 sowohl zu einer hakenartigen -- nach unten offenen -- Endöse 57 gekrümmt als auch nach oben hin mit einem angeformten Klinkenbolzen 60 runden Umrisses ausgestattet ist. Letzterer bietet eine zum Schwenkkopf 40 abwärts geneigte Firstfläche 62 an und berührt in der in Fig. 5 skizzierten Anschlagstellung die eine Querkante 45 der Firstplatte 46; denn in dieser Anschlagstellung drückt die an der Innenfläche der Firstplatte 46 gelagerte -- längsschnittlich U-artige -- flache Stabfeder 64 den Frontarm 56 gegen die Firstplatte 46.

Nicht gezeigt ist, dass der Klinkenbolzen 60 in Anschlagstellung mit einem das Kammprofil 47 führenden -- fahrzeugseitigen -- Schienenprofil 20 rastend zusammenwirkt, beispielsweise in eine Bohrung eines sog. Airlineprofils bzw. AJ-Systemprofils eingreift.

Der Klinkenkörper 50 wird gegen die Kraft jener Blatt- oder Stabfeder 64 durch einen Zugstab 70 geführt, der gemäß Fig. 2, 4 aus einem Hohlprofil 72 mit Griffende 74 einends und einem Hakenprofil 76 andernends besteht. Dieses ist aus der -- mit der Mittelachse M des Schwenkkopfes 40 fluchtenden-- Stabachse Z gebogen und mit einem diese querenden Steckabschnitt 78 ausgestattet, der in jene Endöse 57 des Klinkenkörpers 50 eingesetzt ist. Dank der formschlüssigen Verbindung zwischen Klinkenkörper 50 und Zug- oder Entriegelungsstab 70 ist der feste Sitz des letzteren in jenem Klinkenkörper 50 gewährleistet und somit ein Abrutschen unterbunden.

Das Vertikalprofil 28ₐ der Fig. 7 bis 10 weist an seinen beiden Stirnwänden 27 innenseitig jeweils eine Einschubbahn 80 auf, die von einer an die Flankenwände 26 angeformten Querwand 82 begrenzt ist. In jeder dieser Einschubbahnen 80 sitzt ein deren Querschnitt ausfüllender Profilsteg 84, der sich -- dank geneigter Seitenkanten 34 -- endwärts verjüngt und in diesem Bereich von einem Achsbolzen 42ₐ durchsetzt ist. Dieser dient der Lagerung des hier querschnittlich U-förmigen Schwenkkopfes 41, dessen Schenkelwände 48 er durchgreift.

Von der ebenen Firstplatte 46ₐ des Schwenkkopfes 41 ragt in der Profilachse A ein oben beschriebenes, eine Kopfleiste 47ₖ enthaltendes Kammprofil 47ₐ auf, das hier in Längsmitte durch eine Bohrung 86 in zwei Abschnitte geteilt ist. Diese Bohrung 86 durchgreift auch die Firstplatte 46ₐ. Der Bohrungsdurchmesser entspricht -- mit Spiel -- dem Durchmesser d eines in der Bohrung 86 geführten Klinkenbolzens 60, der Teil eines hier gemäß Fig. 8 linearen Klinkenkörpers 51 ist. Dieser enthält einen axialen Längsschlitz 88, in dem der Achsbolzen 42ₐ gleitet; zwischen diesem und einem bohrungsartigen oberen Schlitzraum 89 des Längsschlitzes spannt sich eine Schraubenfeder 90. Diesem -- durch die Spannkraft der Schraubenfeder 66 anhebbaren oder gegen diesen abzusenkenden -- Klinkenkörper 51 ist an einer Frontfläche in mittlerem Abstand t₁ zu seiner Unterfläche 53 der Breite b ein von jener abkragender Haken 58 mit endwärts gerichtetem Hakenende 58ₑ angeformt. In der in Fig. 8 erkennbaren Tieflage des Klinkenbolzens 60 verläuft der Haken 58 etwa neben den Unterkanten 48ₜ der Schenkelwände 48.

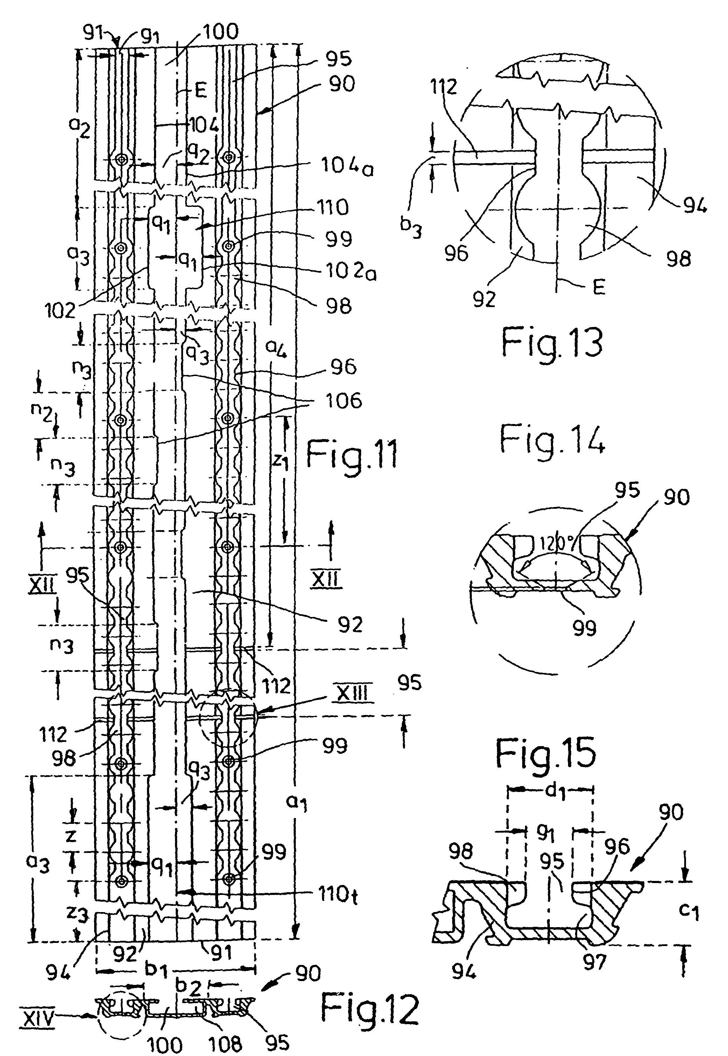

Der oben beschriebene Entriegelungsstab 70 wird außer Gebrauch in einem Doppelstockprofil 90 gelagert, das mit einer Länge a₁ von etwa 1.600 mm, einer Breite b₁ von etwa 150 mm sowie einer Dicke c₁ von etwa 20 mm beispielhaft in Fig. 11, 12 verdeutlicht ist. Der Querschnitt setzt sich aus einem Mittelstreifen 92 der Breite b₂ von etwa 28 mm und zwei flankierend angeformten Randstreifen 94 zusammen, welch letztere in der Art von sog. Airline-Profilen mit jeweils einer hinterschnittenen Längsnut 95 versehen sind; in diese sind axial und in Mittenabstand z zueinander Bohrungen 98 angeordnet, deren Durchmesser d₁ größer ist als die Breite g₁ der Längsnut 95; hierdurch ergeben sich zwischen den Bohrungen 98 Kantenabschnitte 96 der Längsnut 95, unter denen Hinterschneidungsbereiche 97 verlaufen. In regelmäßigen axialen Mittelabständen z₁ von etwa 200 mm sind im Zentrum von Bohrungen 98 Schraublöcher 99 vorgesehen, wobei das den Querkanten 91 des Doppelstockprofils 90 benachbarte Paar von Schraublöchern 99 in einem Abstand z₂ dazu von etwa 130 mm liegt.

Im Mittelstreifen 92 ist ebenfalls eine hinterschnittene Längsnut 100 zu erkennen, deren Seitenwände 102 in gleichen Abständen q₁ von 22,5 mm zur Profillängsachse E verlaufen, deren Längskanten 104, 104ₐ jedoch abschnittsweise -- unter Bildung von Hinterschneidungsräumen 108 -- unterschiedliche Abstände zur Profillängsachse E anbieten; die in Fig. 11 linke Längskante 104 steht beispielsweise im oberen Bereich des Doppelstockprofils 90 in einem Abstand q₂ von etwa 15 mm zur Profillängsachse E, die rechte Längskante 104ₐ in einem Abstand q₃ von etwa 10 mm.

In einem Abstand a₂ von 210 mm zur oberen Querkante 91 erweitert sich die Längsnut 100 im Bereich eines Fensters 110 axialer Länge a₃ von 70 mm auf die Seitenwände 102 der Längsnut 100, die -- wie gesagt -- in einem Abstand q₁ von 22,5 mm zur Profilachse E verlaufen. An dieses Fenster 110 schließen anderseits wieder die Hinterschneidungsräume 108 unterschiedlicher Breite an. Nahe der in Fig. 11 unteren Querkante 91 ist ein anderes Fenster 110ₜ der Länge a₃ zu erkennen, die hier nahezu dem oben erwähnten Abstand a₂ entspricht. Das Fenster 110ₜ ist einerseits von einer Seitenwand 102 der Längsnut 100 begrenzt und anderseits von einem Längskantenabschnitt, dessen Abstand q₃ von der Profilachse E hier 13 mm misst.

Zwischen den beiden Fenstern 110, 110ₜ sind an beiden Längskanten 104, 104ₐ in axialen Abständen n₂ von 40 mm zueinander wechselweise schmale Kantenrippen 106 axialer Länge n₃ von 40 mm angeordnet, die rinnenartig zur Profilachse E hin ragen.

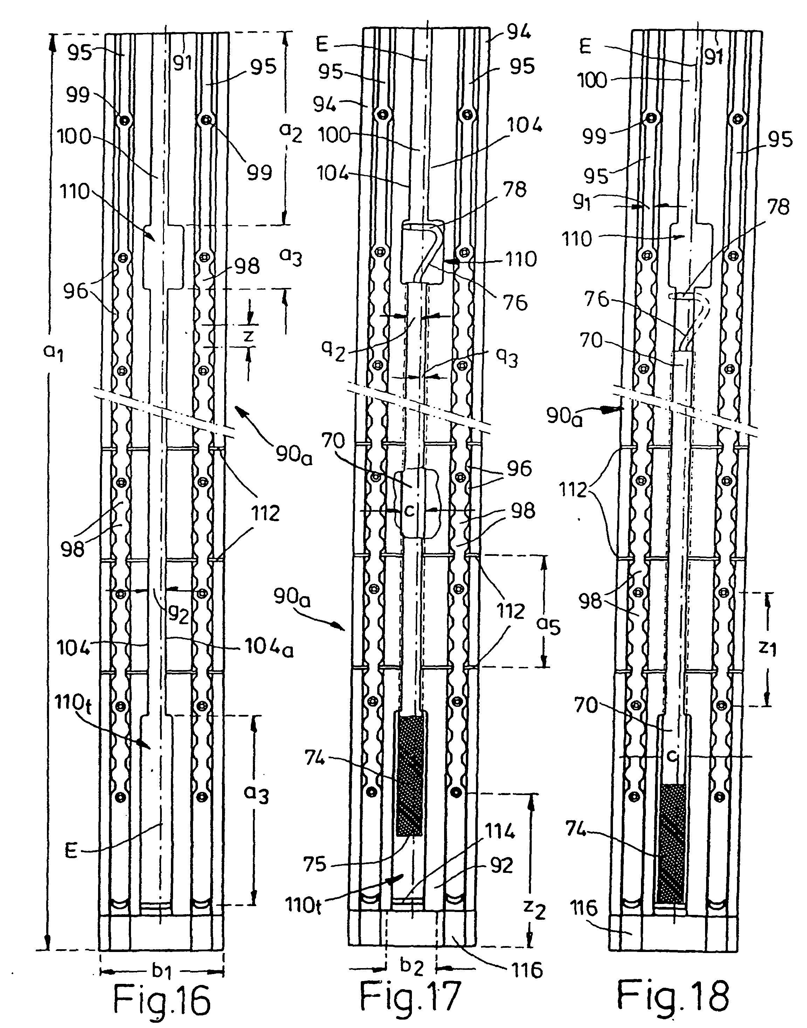

In diese Längsnut 100 wird -- wie in Fig. 17, 18 zu einem anderen Doppelstockprofil 90ₐ gezeigt -- ein Entriegelungs- oder Zugstab 70 eingeführt und u.a. durch jene Kantenrippen 106 gehalten.

Mit 112 sind Quernuten geringer Breite b₂ (3 mm) bezeichnet, deren in Fig. 11 obere in einem Abstand a₄ von etwa 1.800 mm zur oberen Querkante 91 verläuft und die auch unten hin in regelmäßigen Abständen a₅ von 125 mm angeordnet sind.

Bei dem Doppelstockprofil 90ₐ der Fig. 16 bis 18 fehlen jene Kantenrippen 106; die Breite g₂ der -- zur Profilachse E exzentrisch verlaufenden -- Längsnut 100 ist hier -- von den Fenstern 110, 110ₜ abgesehen -- konstant und kürzer als die Dicke c des Zugstabes 70, der in den Hinterschneidungsraum 108 eingeschoben und darin gehalten wird; in Raststellung nach Fig. 18 liegt das Hakenprofil 76 unterhalb des oberen Fensters 110, und die Stirnfläche 75 des Griffendes 74 sitzt einer inneren Fußplatte 114 des Doppelstockprofils 90ₐ auf, das unterhalb dieser durch eine Sockelplatte 116 geschlossen ist.

## Patentansprüche

1. Vorrichtung zum Sichern von Ladegut auf der Ladefläche eines Fahrzeuges od.dgl. Einrichtung in Form eines balkenartigen Profils (28) mit wenigstens einem an diesem einends gelagerten Einsatzprofil (30), an dem ein Schwenkkopf (40, 40ₐ) rinnenartigen Querschnitts und einem relativ zu ihm bewegbar gelagerten Klinkenbolzen (60) als Anschlussorgan für Gegenorgane an der Ladefläche bzw. an einem dieser zugeordneten Kastenaufbau mittels eines Achsbolzens (42) angelenkt ist,
**dadurch gekennzeichnet,**
**dass** der Klinkenbolzen (60) außerhalb des rinnenartigen Querschnitts des Schwenkkopfes (40, 40ₐ) von einem Klinkenkörper (50) zur Firstplatte (46) des Schwenkkopfes (40, 40ₐ) hin aufragt und der Klinkenkörper (50) vom Achsbolzen (42) des Schwenkkopfes (40, 40ₐ) durchsetzt sowie ihm ein Kraftspeicher (64) zugeordnet ist.

2. Vorrichtung nach Anspruch 1, **dadurch gekennzeichnet, dass** der Klinkenkörper (50) nahe dem Klinkenbolzen (60) mit einer Öse (58) versehen ist als Kupplungselement für einen Betätigungs- oder Zugstab (70).

3. Vorrichtung nach Anspruch 2, **dadurch gekennzeichnet, dass** der Zugstab (70) ein zu seiner Stabachse (Z) etwa radial gebogenes Kupplungsende (78) als Steckorgan für die Öse (58) des Klinkenkörpers (50) aufweist, das in der Öse drehbar gelagert ist, wobei gegebenenfalls die Stabachse (Z) mit der Mittelachse (M) des Schwenkkopfes (40, 40ₐ) etwa fluchtet.

4. Vorrichtung nach Anspruch 2 oder 3, **dadurch gekennzeichnet, dass** der Zugstab (70) einends zumindest einen Handgriff (74) enthält.

5. Vorrichtung nach einem der Ansprüche 1 bis 4, **dadurch gekennzeichnet, dass** der Klinkenkörper (50) andernends einen Heckabschnitt (54) mit Aufnahmenut (55) für den in dieser gehaltenen, als Blatt- oder Stabfeder (64) ausgebildeten Kraftspeicher enthält, wobei gegebenenfalls die Blatt- oder Stabfeder (64) zwischen dem Heckabschnitt (54) des Klinkenkörpers (50) und der benachbarten Firstplatte (46) des Schwenkkopfes (40, 40ₐ) U-förmig gekrümmt ist.

6. Vorrichtung nach einem der Ansprüche 1 bis 5, **dadurch gekennzeichnet, dass** der Achsbolzen (42) in einem Paar von parallelen Flankenstegen (33) lagert, die an Flankenwände (32) des Einsatzprofils (30) anschließen, wobei gegebenenfalls die Flankenwände (32) innenseitig mit jeweils einer parallel zur Profilachse (A) gerichteten Längsnut (36) versehen sind.

7. Vorrichtung nach Anspruch 6, **dadurch gekennzeichnet, dass** der Längsnut (36) ein Paar sie begrenzender Innenrippen (37) der Flankenwand (32) zugeordnet ist und/oder dass zumindest eine Flankenwand (33) mit einem achsparallelen Wandungsschlitz (38) versehen ist.

8. Vorrichtung nach einem der Ansprüche 1 bis 7, **dadurch gekennzeichnet, dass** an die Firstplatten (46) des Schwenkkopfes (40, 40ₐ) außenseitig ein querschnittlich T-förmiges Kammprofil (47) angeformt ist, dessen Kopfleiste (47ₖ) in Ruhelage des Klinkenbolzens (60) mit dessen Firstfläche (62) etwa fluchtet, wobei gegebenenfalls das Kammprofil (47) querschnittlich in der Längsachse (A) des Einsatzprofils (30) verläuft.

9. Vorrichtung nach Anspruch 8, **dadurch gekennzeichnet, dass** das Kammprofil (47) von einer ebenen, die Längsachse (A) des Einsatzprofils (30) querenden Oberfläche (46ₐ) der Firstplatte (46) des Schwenkkopfes (40) aufragt (Fig. 3), wobei gegebenenfalls die Breite der ebenen Oberfläche (46ₐ) etwa der Breite (n) der Kopfleiste (47ₖ) entspricht.

10. Vorrichtung nach Anspruch 9, **dadurch gekennzeichnet, dass** die obere Oberfläche (46ₐ) in Abstand zum Kammprofil (47) querschnittlich beidseits in eine von ihr stufenartig aufragende Leistenanformung (49) übergeht, wobei gegebenenfalls die Oberfläche der Leistenanformung (49) in axialem Abstand (k₁) etwa parallel zur Oberfläche (46ₐ) der Firstplatte (46) verläuft.

11. Vorrichtung nach Anspruch 10, **dadurch gekennzeichnet, dass** die Leistenanformung (49) seitlich die Außenfläche der benachbarten Schenkelwand (48) des Schwenkkopfes (40) überragt.

12. Vorrichtung nach Anspruch 8, **dadurch gekennzeichnet, dass** das Kammprofil (47) von einer beidseits querschnittlich aufwärts gekrümmten Oberfläche (46_{b}) der Firstplatte (46) des Schwenkkopfes (40ₐ) aufragt (Fig. 4), wobei gegebenenfalls eine querschnittlich teilkreisförmige Kontur der Oberfläche (46_{b}) der Firstplatte (46) vorgesehen ist.

13. Vorrichtung nach Anspruch 12, **dadurch gekennzeichnet, dass** die gekrümmte Oberfläche (46_{b}) der Firstplatte (46) beidseits der Längsachse (A) des Einsatzprofils (30) mit den beiden Außenflächen der Schenkelwände (48) des Schwenkkopfes (40ₐ) jeweils einen aufragenden Längsgrat (49ₐ) bildet.

14. Vorrichtung nach Anspruch 12 oder 13, **gekennzeichnet durch** eine den Querschnitt bzw. die Kontur der Oberfläche (46_{b}) bestimmende Kreiskontur (K), deren Radius (r) etwa der Breite des Schwenkkopfes (40ₐ) entspricht.

15. Vorrichtung nach Anspruch 12 oder 13, **gekennzeichnet durch** eine den Querschnitt bzw. die Kontur der Oberfläche (46ₐ) bestimmende Kreiskontur (K), deren Radius (r) etwa der doppelten Breite (n₁) der Kopfleiste (47ₖ) des Kammprofils (47) entspricht.

## Claims

1. Device for securing loads on the loading platform of a vehicle or like device in the form of a girder-like profile (28) having at least one insert profile (30) mounted on the latter at one end on which a pivot head (40, 40ₐ) of channel-like cross-section and a pawl pin (60) mounted movably relative thereto is linked as a connecting element for counterpart elements to the loading platform or to a box structure assigned to the latter by means of a king pin (42)
**characterised in that**
the pawl pin (60) projects up outside the channel-like cross-section of the pivot head (40, 40ₐ) from a pawl member (50) towards the ridge plate (46) of the pivot head (40, 40ₐ) and the king pin (42) of the pivot head (40, 40ₐ) passes through the pawl member (50) and an energy storage device (64) is assigned thereto.

2. Device according to claim 1, **characterised in that** the pawl member (50) is provided in the vicinity of the pawl pin (60) with an eyelet (58) as a coupling element for an actuating or pulling rod (70).

3. Device according to claim 2, **characterised in that** the pulling rod (70) possesses a coupling end (78) bent approximately radially relative to its rod axis (Z) as a plug-in member for the eyelet (58) of the pawl member (50) and rests in the eyelet in rotatable manner, wherein if need be the rod axis (Z) is in alignment with the central axis (M) of the pivot head (40, 40ₐ).

4. Device according to claim 2 or 3, **characterised in that** the pulling rod (70) comprises at least one handle (74) at one end.

5. Device according to one of claims 1 to 4, **characterised in that** the pawl member (50) possesses at the other end a tail section (54) with a receiving groove (55) for the energy storage device constructed in the form of a leaf or bar spring (64) held in the latter, wherein if need be the leaf or bar spring (64) is preferably curved in U-shape between the tail section (54) of the pawl member (50) and the neighbouring ridge plate (46) of the pivot head (40, 40ₐ).

6. Device according to one of claims 1 to 5, **characterised in that** the king pin (42) rests in a pair of parallel side webs (33) adjoining side walls (32) of the insert profile (30), wherein if need be the side walls (32) are each provided on the inside with a longitudinal groove (36) oriented parallel to the profile axis (A).

7. Device according to claim 6, **characterised in that** to the longitudinal groove (36) is assigned a pair of inner ribs (37) of the side wall (32) to bound it and/or that at least one side wall (33) is provided with a wall slot (38) parallel to the axis.

8. Device according to one of claims 1 to 7, **characterised in that** on the outside of the ridge plates (46) of the pivot head (40, 40ₐ) a grooved profile (47) of T-shaped cross-section is moulded in place whose headpiece (47ₖ) in the position of rest of the pawl pin (60) aligns approximately with the ridge surface (62) thereof, wherein if need be the cross-section of the grooved profile (47) runs in the longitudinal axis (A) of the insert profile (30).

9. Device according to claim 8, **characterised in that** the grooved profile (47) projects up from a level surface (46ₐ) of the ridge plate (46) of the pivot head (40) (Fig 3), which surface traverses the longitudinal axis (A) of the insert profile (30), wherein if need be the width of the level surface (46ₐ) is approximately the same as the width (n) of the headpiece (47ₖ).

10. Device according to claim 9, **characterised in that** the upper surface (46ₐ) passes over cross-sectionally on both sides at a distance from the grooved profile (47) into a ledge moulding (49) projecting upwards therefrom in stepwise manner, wherein if need be the surface of the lodge moulding (49) runs at an axial distance (k₁) approximately parallel to the surface (46ₐ) of the ridge plate (46).

11. Device according to claim 10, **characterised in that** the ledge moulding (49) projects laterally over the outer surface of the neighbouring leg wall (48) of the pivot head (40).

12. Device according to claim 8, **characterised in that** the grooved profile (47) projects up from a surface (46_{b}) of the ridge plate (46) of the pivot head (40ₐ) curved upwardly in cross-section on both sides (Fig 4), wherein if need be a contour of the surface (46_{b}) of the ridge plate (46) shaped in cross-section like a segment of a circle is provided.

13. Device according to claim 12, **characterised in that** the curved surface (46_{b}) of the ridge plate (46) on both sides of the longitudinal axis (A) of the insert profile (30) together with the two outer surfaces of the leg walls (48) of the pivot head (40ₐ) form in each case an upwardly projecting longitudinal ridge (49ₐ).

14. Device according to claim 12 or 13, **characterised by** a circular contour (K) determining the cross-section or the contour of the surface (46_{b}) whose radius (r) is approximately the same as the width of the pivot head (40ₐ).

15. Device according to claim 12 or 13, **characterised by** a circular contour (K) determining the cross-section or the contour of the surface (46_{b}) whose radius (r) is approximately the same as twice the width (n₁) of the headpiece (47ₖ) of the grooved profile (47).

## Revendications

1. Dispositif pour la fixation de marchandises sur la surface de chargement d'un véhicule ou équipement similaire, sous la forme d'un profilé en forme de poutre (28) comportant au moins un profilé intercalaire (30) monté à une de ses extrémités, sur lequel est articulé au moyen d'un axe-pivot (42) une tête pivotante (40, 40a) de section circulaire avec un tourillon à cliquet (60) monté de façon mobile par rapport à elle servant d'élément de raccordement pour les éléments opposés de la surface de chargement et/ou du caisson disposé dessus,
**caractérisé en ce que**
le tourillon à cliquet (60) dépasse à l'extérieur de la section circulaire de la tête pivotante (40, 40a) à partir d'un corps d'encliquetage (50) vers la plaque de sommet (46) de la tête oscillante (40, 40a) et **en ce que** le corps d'encliquetage (50) est traversé par l'axe-pivot (42) de la tête oscillante (40, 40a) et qu'un accumulateur d'énergie (64) lui est associé.

2. Dispositif selon la revendication 1, **caractérisé en ce que** le corps d'encliquetage(50) est pourvu à proximité du tourillon à cliquet (60) d'un oeillet (58) servant d'élément d'accouplement pour une barre de commande ou de traction (70).

3. Dispositif selon la revendication 2, **caractérisé en ce que** la barre de traction (70) présente une extrémité d'accouplement (78) quelque peu cintrée radialement par rapport à son axe (Z) et servant pour l'oeillet (58) du corps d'encliquetage (50) d'élément embrochable monté dans l'oeillet de manière à pouvoir tourner, l'axe (Z) de la barre étant le cas échéant à peu près aligné sur l'axe central (M) de la tête oscillante (40, 40a).

4. Dispositif selon une des revendications 2 ou 3, **caractérisé en ce que** la barre de traction comporte au moins une poignée (74) à une extrémité.

5. Dispositif selon une des revendications 1 à 4, **caractérisé en ce que** le corps d'encliquetage (50) comporte à l'autre extrémité une partie arrière (54) avec une rainure de positionnement (55) pour l'accumulateur d'énergie conçu comme ressort à lame ou à barre (54) maintenu dans cette rainure, le ressort à lame ou à barre (64) étant le cas échéant plié en forme de U entre la partie arrière (54) du corps d'encliquetage (50) et la plaque de sommet (46) de la tête oscillante (40, 40a) adjacente.

6. Dispositif selon une des revendications 1 à 5, **caractérisé en ce que** l'axe-pivot (42) est monté dans deux traverses latérales (33) parallèles qui sont raccordées aux parois latérales (32) du profilé intercalaire (30), les parois latérales (32) étant le cas échant chacune pourvues côté intérieur d'une rainure longitudinale orientée parallèlement à l'axe (A) du profilé.

7. Dispositif selon la revendication 6, **caractérisé en ce qu'**à la rainure longitudinale (36) sont associées deux nervures intérieures (37) de la paroi latérale (32) la délimitant, et/ou qu'au moins une paroi latérale (33) est pourvue d'une fente de séparation (38) parallèle à l'axe.

8. Dispositif selon une des revendications 1 à 7, **caractérisé en ce qu'**au niveau des plaques de sommet (46) de la tête oscillante (40, 40a) est formé côté extérieur un profilé cannelé (47) de section en forme de T dont la bordure supérieure (47k) est à peu près alignée en position de repos du tourillon à cliquet (60) sur la surface supérieure (62) de ce dernier, le profilé cannelé (47) passant le cas échéant transversalement dans l'axe longitudinal (A) du profilé intercalaire (30).

9. Dispositif selon la revendication 8, **caractérisé en ce que** le profilé cannelé (47) dépasse (figure 3) d'une surface (46a) de la plaque de sommet (46) de la tête oscillante (40, 40a) plane et croisant l'axe longitudinal (A) du profilé intermédiaire (30), la largeur de la surface plate (46a) correspondant le cas échéant à peu près à la largeur (n) de la bordure supérieure (47k).

10. Dispositif selon la revendication 9, **caractérisé en ce que** la surface supérieure (46a) devient à distance du profilé cannelé (47) des deux côtés transversalement une forme de bordure (49) dépassant d'elle en forme de marche, la surface de la forme de bordure (49) passant le cas échéant à la distance axiale (k₁) à peu près parallèlement à la surface supérieure (46a) de la plaque de sommet (46).

11. Dispositif selon la revendication 10, **caractérisé en ce que** la forme de bordure (49) dépasse latéralement de la surface extérieure de la paroi latérale (48) de la tête oscillante (40).

12. Dispositif selon la revendication 8, **caractérisé en ce que** le profilé cannelé (47) dépasse (figure 4) d'une surface (46b) de la plaque de sommet (46) de la tête oscillante (40a) pliée des deux côtés transversalement vers l'avant, le contour de la surface (46a) de plaque de sommet (46) étant le cas échéant prévu pour être transversalement partiellement circulaire.

13. Dispositif selon la revendication 12, **caractérisé en ce que** la surface pliée (46b) de la plaque de sommet (46) forme de part et d'autre de l'axe longitudinal (A) du profilé intercalaire (30) avec les deux surfaces extérieures de la paroi latérale (48) de la tête oscillante une arête longitudinale (49a).

14. Dispositif selon une des revendications 12 ou 13, **caractérisé par** un contour circulaire (K) déterminant la section et/ou le contour de la surface supérieure (46a) dont le rayon (r) correspond à peu près à de la largeur de la tête oscillante (40a).

15. Dispositif selon une des revendications 12 ou 13, **caractérisé par** un contour circulaire (K) déterminant la section et/ou le contour de la surface supérieure (46a), dont le rayon (r) correspond à peu près au double de la largeur (n₁) de la bordure supérieure (47k) du profilé cannelé (47).
